# EUROPEAN PATENT APPLICATION

(11) **EP 4 706 860 A1**
(43) Date of publication of application: **11.03.2026**
(21) Application number: 25198693.1
(22) Date of filing: 28.08.2025
(51) Int. Cl.: B23K 9/12, B23K 9/133

(54) **SYSTEM FOR AUTOMATICALLY CONTROLLING DRIVE ROLL TENSION**

(30) Priority: 05.09.2024 US 202463690971 P; 25.08.2025 US 202519308645
(71) Applicant: Illinois Tool Works Inc., Glenview IL 60025 (US)
(72) Inventor: DUNAHOO, Jason, Glenview, 60025 (US); RUMAO, Manuel, Glenview, 60025 (US)
(74) Representative: HGF

(57) **Abstract**

Systems and methods are provided for automatically controlling drive roll tension. A welding-type system may include a wire feeder that may include one or more wire feeding components configured to feed an electrode wire, and a wire tensioning mechanism configured to automatically control applying a tensioning force to the electrode wire during feeding of the electrode wire via the wire feeder. The wire tensioning mechanism may include one or more pairs of drive rolls for moving the electrode wire during the feeding of the electrode wire, and a tensioning control component configured for controlling the tensioning force. The wire tensioning mechanism may be configured to automatically modify, via the tensioning control component, the tensioning force to maintain a target value.

## Description

### CLAIM OF PRIORITY

This patent application claims priority to and claims benefit from United States Provisional Patent Application Serial No. 63/690,971, filed on September 5, 2024. The above identified application is hereby incorporated herein by reference in its entirety.

### BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, wire feeders used in some conventional welding-type systems may have limitations with respect to managing various parameters or functions associating with wire feeding during welding operations, such as controlling tensioning applied to the wire during feeding of the wire.

Further limitations and disadvantages of conventional approaches will become apparent to one skilled in the art, through comparison of such approaches with some aspects of the present systems and methods set forth in the remainder of this disclosure with reference to the drawings.

### BRIEF SUMMARY

Aspects of the present disclosure relate to welding solutions. More specifically, various implementations in accordance with the present disclosure are directed to systems and methods for automatically controlling drive roll tension, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

### BRIEF DESCRIPTION OF THE DRAWINGS

Fig. 1 shows an example welding-type setup.
Fig. 2 shows an example welding-type wire feeder configurable to automatically control drive roll tensioning.
Fig. 3 shows an example welding-type wire feeder configurable to automatically control drive roll tensioning using an alternative design.
Fig. 4 shows an example tensioning arm that may be used in a wire tensioning mechanism.
Fig. 5 illustrates a flowchart of an example automatic tensioning process.

### DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}*.* In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

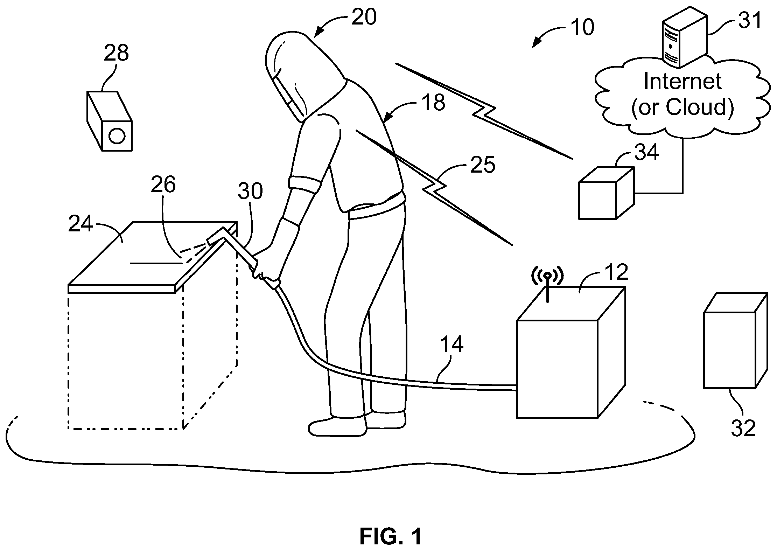

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and or satellite telematics hardware, for example.

In some instances, it may be desirable to control and/or adjust certain aspects of various functions in welding-type setups, such as the welding-type setup 10 of Fig. 1. For example, as noted above, the welding-type setup 10 may incorporate a wire feeder that may be used in feeding, e.g., electrode wire or the like, during welding operations, and in some instances controlling or adjusting certain aspects or parameters associated with the wire feeder and/or the feeding of wire thereby may be desirable. One such aspect or parameter is the tensioning of the wire while being fed during welding-type operations. In this regard, in some implementations, the tensioning of the wire may be controlled such as by adjusting a force applied on the wire within the wire feeder.

Conventional solutions for adjusting tensioning of the wire may have some limitations and/or shortcomings, however. In this regard, in conventional solutions wire tensioning is typically done manually, with the user need to interact with wire tensioning mechanisms to manually set or adjust the tensioning applied to the electrode wire. Such manual operation is cumbersome and results in inefficiencies due to the time and effort needed to make the manual adjustments. Further, some user may be too inexperienced to know of or how to account for various aspects or features affecting wire feeding, such as variations in the wire (e.g., variation with respect to certain characteristics associated with the wire, such as type, material (steel vs. aluminum), dimensions (different wire gauges), etc.), variations in the in the welding processes that are utilized, etc.

Solutions in accordance with the present disclosure overcome at least some of the limitations and/or shortcomings associated with conventional solutions, such as by utilizing improved mechanisms for setting and/or adjusting tensioning of wires during wire feeding. In particular, in various implementations based on the present disclosure, automatic wire tensioning mechanisms are utilized to eliminate (or reduce) the need for manual control of wire tensioning, particularly during active operation of the system.

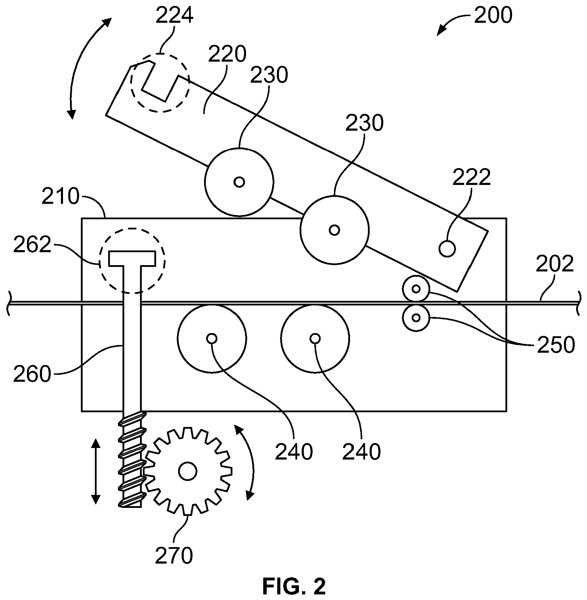

Fig. 2 shows an example welding-type wire feeder configurable to automatically control drive roll tensioning. Shown in Fig. 2 is a welding-type wire feeder 200 (or portion thereof).

The welding-type wire feeder 200 may be configured for use in a welding-type system or setup (e.g., the welding-type setup 10 of Fig. 1) for facilitating feeding of electrode wires (e.g., electrode wire 202) utilized during welding operations.

The welding-type wire feeder 200 may comprise suitable wire feeding components (not shown) configured to enable feeding of electrode wires (e.g., the electrode wire 202 in Fig. 2), such as from an electrode wire source on one end, into another component (not shown) in the welding-type system (e.g., a welding-type torch or the like) on the other end. In this regard, the electrode wires may be fed via suitable welding-type connectors. The electrode wire source (not shown) may comprise a wire spool or the like, which may be arranged as a separate component in the welding-type system, or may be incorporated directly into the welding-type wire feeder 200. In this regard, the wire spool may comprise suitable physical components for engaging electrode wires, particularly in the form of rolls, and for enable providing the electrode wire therefrom during feeding operations, such as in rotational manner-that is, where the rolls may rotate while the electrode wires are being pulled of the roll. Nonetheless, the disclosure is not limited to use of wire spools that operate in such manner, or even to use of wire spools, and as such any suitable solutions for providing the electrode wire during feeding operations may be used.

In some instances, it may be desirable to apply a tensioning force to the electrode wire(s). Consequently, wire feeders, such as the welding-type wire feeder 200 may incorporate one or more tensioning control component(s), which may be configured for applying tensioning force onto the electrode wires while being fed. In this regard, different designs and/or mechanisms may be used in implementing such wire tensioning mechanisms and/or in effectuating the application of tensioning forces thereby. In conventional solutions wire tensioning mechanisms are typically manually operated, with the user interacting with wire tensioning mechanisms to manually set or adjust the tensioning applied to the electrode wire as it is fed through the wire feeder. For example, in various implementations, wire tensioning mechanisms may be implemented as a rotational-based assembly (e.g., a knob-based assembly), with the tensioning forced applied by the wire tensioning mechanism being increased or decreased by rotating a tensioning control element (e.g., a knob). However, such conventional solutions may have various limitations and/or shortcomings, as described above.

In accordance with the present disclosure, wire feeders (e.g., the welding-type wire feeder 200) may be modified to incorporate improved wire tensioning mechanisms for tensioning of the electrode wire(s), particularly by allowing for automatic control of tensioning of the electrode wire(s) during wire feeding operations. In this regard, as noted above, in conventional designs the user (also referred to as "welder" or "operator") adjusts the tension manually, such as by engaging some form of tensioning adjustment user control (e.g., a knob or the like). However, such manual adjustment based approaches may have various limitations and/or issues, such as with respect to the accuracy of the adjustments and/or efficiency of operation. Such limitations and/or issues may be particularly challenging to inexperienced users

For example, users (especially inexperienced users) may not be able to adjust the tensioning force properly, which may affect performance of welding operations. In this regard, the users may struggle to set the proper drive roll tension, particularly based on different characteristics of the wire (e.g., based on wire type, wire diameter, etc.). As such, in many instances users may make inaccurate adjustments, such as under-tightening or over-tightening the drive roll tension leading to many potential performance problems. In this regard, if the tensioning is below required, the electrode wire may not be fed correctly, and if the tensioning is more than required (too much), the electrode wire may be damaged. Similarly, if the tensioning applied at the wire spool (e.g., spool hub tension) is below some required value, the spool may continue to spin even after the welding has stopped resulting in bird's nesting around the spool; and if the spool hub tension is too high, may not allow the feeding components of the wire feeder (e.g., drive rolls) to pull and feed the electrode wire properly, or to over work the wire drive motor resulting is premature failure. In addition, manual adjustment based approaches may also result in inefficient and/or burdensome operation due to the need to make many (or even continuous) adjustments.

Solutions based on the present disclosure may remedy or mitigate at least some of the limitations and/or issues associated with conventional designs, particularly by use of automatic wire tensioning mechanism in the system. In this regard, designs based on the present disclosure may allow for completely removing or eliminating the need for manual control of drive roll tensioning by the user. In various embodiments based on the present disclosure an automatic tensioning mechanism is used, comprising suitable components configured to applying suitable tensioning force on the electrode wire, without requiring active input or control by the user. In various implementations, a design having such key elements as a simplified drive roll pressure arm and a controlled tensioning device may be used. Other elements of such designs may include idler rolls (or the like) for providing wire speed feedback may be used. Such designs yield a closed loop system where user feeds wire through the new feeder and closes the tensioning arm, the system takes over and automatically starts applying drive roll tension until the wire starts moving (e.g., as indicated by wire speed feedback). If tension is too light, the wire will not move consistently, and thus will slip in the drive rolls and slow down or stop. A control loop would be employed to provide ideal tension based on system dynamics.

As illustrated in Fig. 2, the welding-type wire feeder 200 incorporates a wire tensioning mechanism 210, which is configured to provide automatic wire tensioning in accordance with an example embodiment based on the present disclosure. The wire tensioning mechanism 210 comprises one or more pairs of drive rolls, configured for moving the electrode wire during the feeding of the electrode wire, with the one or more pairs of drive rolls comprising one or more top drive rolls 230 and corresponding one or more bottom drive rolls 240. The top drive rolls 230 and the bottom drive rolls 240 are arranged such that when engaging one another, each top drive roll 230 and the corresponding bottom drive roll 240 form a pair of drive rolls. In some instances, both the top drive rolls 230 and the bottom drive rolls 240 are active-that is, both drive rolls incorporate features that are used in facilitating the moving of electrode wire during feeding operations. However, the disclosure is not limited to such configuration, and as such in some instances the drive rolls may be configured such as one drive roll in each pair (e.g., the top drive rolls) is an active drive roll and the corresponding drive roll is non-active drive roll-e.g., one drive roll has groves or track and the other drive roll is flat.

The wire tensioning mechanism 210 may be configured such that the spacing between the top drive rolls 230 and the bottom drive rolls 240 may be adjusted. This may be done by arranging one or both of the top drive rolls 230 and the bottom drive rolls 240 may be moveable. For example, in some implementations, one of the top drive rolls 230 and the bottom drive rolls 240 may be fixed, while the other one may be movable, such as by attaching them or otherwise having arranged on a movable part or structure.

In the example implementation shown in Fig. 2, this is done by use of a tensioning arm 220 in the wire tensioning mechanism 210, on which the top drive rolls 230 are arranged or attached. The tensioning arm 220 may be configured to move away from the part of the wire tensioning mechanism 210 on which the bottom drive rolls 240 are arranged or attached. For example, the tensioning arm 220 may be configured such as it may be moved in rotational manner, such as by incorporating a hinge (tensioning arm hinge) 222 on one end of the tensioning arm 220, to enable swinging the tensioning arm 220 relative to the tensioning arm hinge 222. In this regard, tensioning arm hinge 222 allows for moving the tensioning arm 420 in pivotable or rotary manner relative to the tensioning arm hinge 222-e.g., swinging the tension arm 400 between an open (detached) state, where the top drive rolls 230 and the bottom drive rolls 240 are detached (separated) from each at least sufficiently prevent use thereof in feeding the electrode wire, and a closed (attached) state, where the top drive rolls 230 and the bottom drive rolls 240 are attached (engaged) to one another at least sufficiently allow use thereof in feeding the electrode wire. The tensioning arm 220 may be configured such that it is biased towards one state (e.g., the open state). For example, tensioning arm 220 may be spring-loaded to bias the tension arm 220 towards the open state.

The wire tensioning mechanism 210 may further comprise a tensioning control component configured for controlling the tensioning force. The tensioning control component may be configured to enable automatically modify the tensioning force applied to the electrode wire 202 in wire tensioning mechanism 210, such as to maintain a target value. In this regard, various designs may be used to facilitate providing the automatic modifying of the tensioning force. For example, in some implementations the tensioning force may be modified by adjusting spacing between the drive rolls (top and bottom) in at least one pair of drive rolls. This may be done by use of spacing element(s) that may be configured to (e.g., individually or collaboratively) adjust the spacing between drive rolls in at least one pair of drive rolls in the wire tensioning mechanism.

In an example embodiment illustrated in Fig. 2, the tensioning control component may comprise a tensioning pin 260 that is configured to function as a spacing element. In this regard, the tensioning pin 260 may be configured to move in a manner that adjust the spacing between drive rolls in at least one pair of drive rolls in the wire tensioning mechanism. For example, the tensioning pin 260 may be configured to move vertically (e.g., up and down within the wire tensioning mechanism 210). Where the tensioning pin 260 securely engages the tensioning arm 220, such vertical movement results in adjustments to the spacing in the pairs of drive rolls.

In some instances, wire tensioning mechanisms based on the present disclosure (e.g., the wire tensioning mechanism 200) may incorporate a locking or securing mechanism to securely maintain components used in spacing the drive rolls in place once a particular setting is selected and applied. For example, in the example implementation illustrated in Fig. 2, the tensioning pin 260 and the tensioning arm 220 are configured to securely engaging each other using latching mechanism. In this regard, the tensioning arm 220 comprises arm-side latch element 224 and the tensioning pin 260 comprises a corresponding pin-side latch element 262, with the arm-side latch element 224 and the corresponding pin-side latch element 262 being configured to engage each other such that the tensioning arm 220 latches onto the top of the tensioning pin 260 when these elements engage. Nonetheless, the disclosure is not limited to this particular configuration, and any suitable locking and/or securing mechanism may be used.

The tensioning pin 260 may incorporate features (e.g., structural or physical features) to facilitate moving the pin. For example, as illustrated in Fig. 2, the tensioning pin 260 comprises a threading for causing the tensioning pin 260 to move in manner that adjusts the spacing between the drive rolls in the at least one pair of drive rolls-namely, moving up and down when the tensioning pin 260 is rotated via the threading.

In some instances, the tensioning control component may further comprises a moving element configured for causing the spacing element(s) to move in manner that adjusts the spacing between the drive rolls in the at least one pair of drive rolls. For example, as illustrated in Fig. 2, where the threaded tensioning pin 260 is used as the spacing element, the wire tensioning mechanism 210 comprises a rotating gear 270 that is used as the moving element. In this regard, the rotating gear 270 may be arranged to engage the thread part of the tensioning pin 260 such that rotating the rotating gear 270 results in moving the tensioning pin 260 up and down. The rotating gear 270 may be controlled (e.g., via the control circuitry) to control the amount of drive roll pressure on the wire, by adjusting the position of the tensioning pin 260, and thus moving the tensioning arm 220 to set or adjust the spacing of the drive rolls.

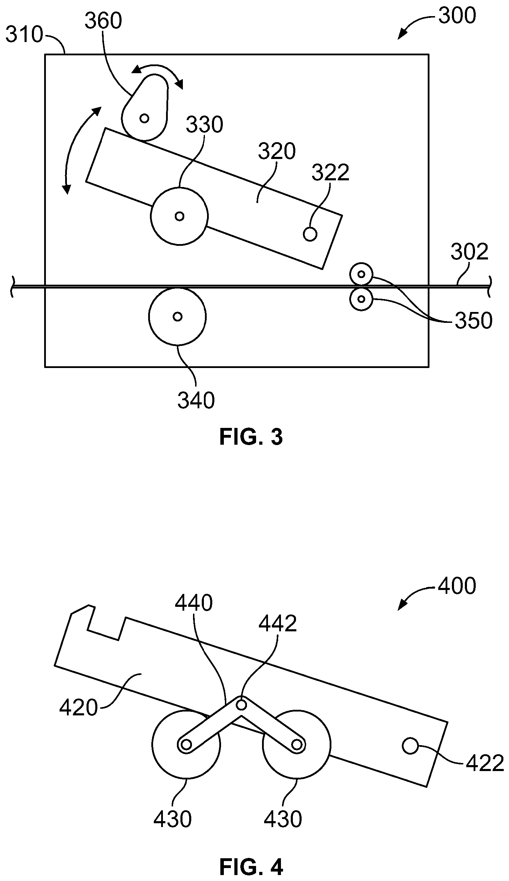

Nonetheless, the disclosure is not limited to the pin-based design illustrated in Fig. 2, and it should be readily understood that various other suitable alternative designs may be used, as long as they allow for adjusting spacing between drive rolls in the pairs. For example, in some implementations other types of elements-that is, other than pins-may be used, such as cams, springs, etc., to adjust the spacing in the pairs of drive rolls. An example alternative cam-based implementation is illustrated in Fig. 3. Further, in some implementations, the spacing element(s) (e.g., tensioning pin(s), cams, springs, etc.) may only control one side of the drive rolls (e.g., the bottom drive rolls).

In some instances, wire tensioning mechanisms based on the present disclosure (e.g., the wire tensioning mechanism 200) may be configured to perform or manage the automatic tensioning of the electrode wire during wire feeding based on real-time wire speed. In this regard, the wire speed may be used (e.g., via control circuitry, which may be any suitable circuitry already present in the system, or may be dedicated, newly added control circuitry) in determining the tensioning force or adjustments thereto, and/or in determining how to effectuate applying the determined tensioning force and/or adjustments. For example, the wire speed may be used via the control circuitry in determining the required spacing between the drive rolls to achieve the desired feeding speed, and/or in determining how to achieve that required spacing -e.g., adjustments to the position of the tensioning arm 220. The control circuitry may be any suitable circuitry already present in the system, or may be dedicated, newly added control circuitry.

The wire speed may be obtained directly, such as using sensory components configured for providing wire speed measurements. In this regard, any suitable sensory components may be used. For example, as illustrated in Fig. 2, the wire tensioning mechanism 200 incorporates a pair of idler rolls 250, which are configured for use as sensory component(s). The idler rolls 250 may be configured to provide wire speed feedback (e.g., based on number of rotations of the rolls per time unit), which may be used (e.g., via the control circuitry) in determining the wire speed. The wire speed may also be obtained or determined based on one or more operational parameters in the welding-type system, such as current, voltage, etc., which may be used (e.g., via the control circuitry) to measure or estimate the actual real-time wire speed. The wire speed may also be obtained or determined (e.g., via the control circuitry) based on feedback or input from a component in the welding-type system-e.g., a feeding motor, with the feedback or input comprising feeding motor tach feedback, for example. Such feedback or input may be used in controlling the adjusting of the tensioning force directly or indirectly. For example, in some instances, the feeding motor tach feedback may be assessed (e.g., using pre-set value or threshold) to determine if there is an indication of error condition. The feeding motor tach feedback surpassing such the pre-set value or threshold may construed as indicating that wire slippage is occurring. In some instances, this may be addressed by reducing the motor speed in lieu of or in conjunction with the adjusting the tensioning force.

In some instances, wire tensioning mechanisms based on the present disclosure (e.g., the wire tensioning mechanism 200) may be configured to ensure that spacing between the drive rolls in all of the pair is the same. For example, in implementations utilizing rotating tensioning arm based design, such as the wire tensioning mechanism 200, additional features and/or components may be incorporated to ensure that spacing between the top drive roll 230 and the bottom drive roll 240 in drive roll pairs farther out from the tensioning arm hinge 222 is the same spacing between the top drive roll 230 and the bottom drive roll 240 in drive roll pairs closer to the tensioning arm hinge 222. This may be done, e.g., by use of roller-pivoting assemblies that ensure that all top drive rolls are level (and thus at the same distance from the corresponding bottom drive rolls) irrespective of their positions on the tension arm. An example embodiment of a wire tensioning mechanism, with automatic tensioning related features, incorporating roller-pivoting assembly is illustrated in and described in more detail with respect to Fig. 4.

In some instances, wire tensioning mechanisms based on the present disclosure (e.g., the wire tensioning mechanism 200) may be configured to support operating in calibration mode, where wire tensioning mechanism may be utilized before actual use to calibrate the system, particularly with respect to the tensioning force applied in the system. Such calibration mode may be utilized, e.g., when putting a new spool.

Fig. 3 shows an example welding-type wire feeder configurable to automatically control drive roll tensioning using an alternative design. Shown in Fig. 3 is a welding-type wire feeder 300 (or portion thereof).

The welding-type wire feeder 300 may be configured for use in a welding-type system or setup (e.g., the welding-type setup 10 of Fig. 1) for facilitating feeding of electrode wires (e.g., electrode wire 302) utilized during welding operations. In this regard, the welding-type wire feeder 300 may be substantially similar to the welding-type wire feeder 200 of Fig. 2, and may operate in substantially similar manner, particularly with respect to providing automatic wire tensioning in accordance with the present disclosure, as described herein.

For example, the welding-type wire feeder 300 may comprise a wire tensioning mechanism 310 configured to provide automatic wire tensioning in accordance with an example embodiment based on the present disclosure. In this regard, the wire tensioning mechanism 310 may comprise suitable components (e.g., mechanical or otherwise) for facilitating automatic wire tensioning. The wire tensioning mechanism 310 may be substantially similar to the wire tensioning mechanism 200 of Fig. 2, and may operate in substantially similar manner. In this regard, the wire tensioning mechanism 310 may utilize a similar tensioning arm based design. As such, the wire tensioning mechanism 310 comprises a tensioning arm 320, which is similar to the tensioning arm 220 of Fig. 2, and is similarly configured to move in rotational manner, relative to a tensioning arm hinge 322, thus swinging between open state and closed state. The wire tensioning mechanism 310 also similarly comprises top drive roll(s) 330 and bottom drive roll(s) 340 for use in feeding the wire in controlled manner. Further, the wire tensioning mechanism 310 similarly comprises idle rolls 350 that is utilized in providing wire speed feedback (measurement) for use in controlling the tensioning force related adjustments as described above.

However, the wire tensioning mechanism 310 differs from the wire tensioning mechanism 200 of Fig. 2 with respect to few aspects. For example, as illustrated in Fig. 3, the wire tensioning mechanism 310 utilizes only one pair of drive rolls (rather than two pairs in the wire tensioning mechanism 210 as illustrated in Fig. 2). Further, the wire tensioning mechanism 310 utilizes a different design for the tensioning control component(s). In particular, as illustrated in Fig. 3, the wire tensioning mechanism 310 utilizes a cam based design (rather than tensioning pin based design). In this regard, the wire tensioning mechanism 310 comprises a tensioning cam 360, which is arranged such that its movement (rotation) adjusts the position of the tensioning arm 320, thus moving the tensioning arm 320 (rotationally around its hinge) resulting in adjustment to the spacing between the top drive roll 330 and the bottom drive roll 340. The operation (e.g., movement) of the tensioning cam 360 may be controlled in the wire tensioning mechanism 310 in substantially manner as the tensioning pin 260 (and related components) in the wire tensioning mechanism 210-e.g., based on real-time wire speed, using similar control circuitry.

Fig. 4 shows an example tensioning arm that may be used in a wire tensioning mechanism. Shown in Fig. 4 is a wire tensioning mechanism (or portion thereof) 400.

The wire tensioning mechanism 400 comprises a tensioning arm 420 engaging multiple top drive rolls 430 (e.g., two drive rolls as illustrated in Fig. 4). The tensioning arm 420 may comprise a tensioning arm hinge 422, which allows for moving the tensioning arm 420 in pivotable or rotary manner-e.g., swinging the tension arm 400 between open (detached) and closed (attached) states, as described above. However, the wire tensioning mechanism 400 may be further configured to ensure that the spacing between each of the top drive rolls 430 and the corresponding bottom drive rolls (not shown) remains the same.

For example, in the implementation illustrated in Fig. 4, the wire tensioning mechanism 400 comprises a rollers arm 440 that engages the top drive rolls 430 in a manner that ensure maintaining the constant spacing. This may be done by use of hinged design for the rollers arm 440. In this regard, the rollers arm 440 may comprise a rollers arm hinge 442, which ensure that the rollers arm 440 swing freely, so that the two top drive rolls 430 remain at the same level (e.g., flat), due to force of gravity), as the position of the tensioning arm 420 is adjusted.

Nonetheless, the disclosure is not limited to such approach, and any suitable design that allows for maintaining constant spacing (e.g., springs, etc.) may be used.

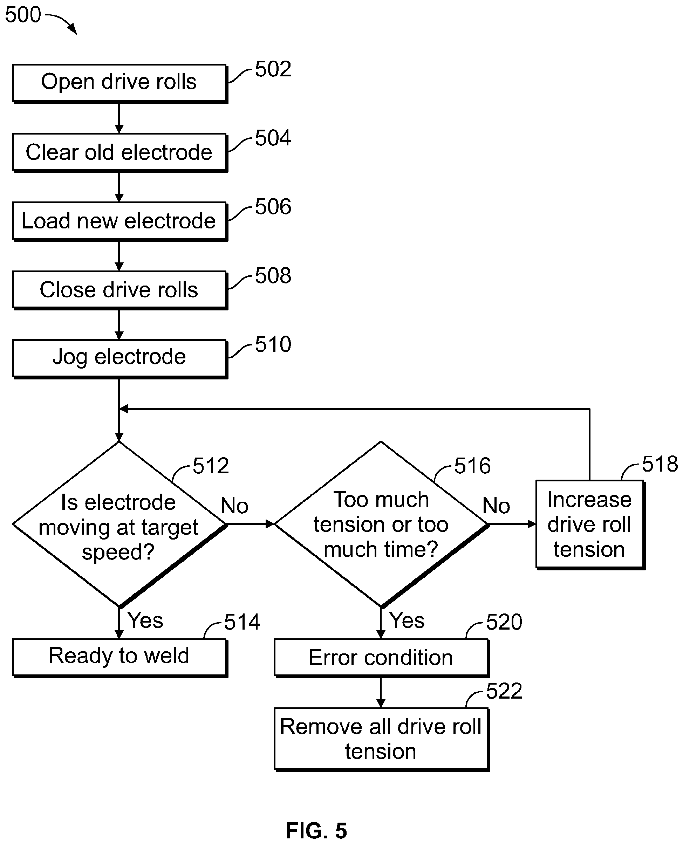

Fig. 5 illustrates a flowchart of an example automatic tensioning process. Shown in FIG. 5 is a flow chart 500, comprising a plurality of example steps (represented as blocks 502-522), which may be performed in a suitable system or setup (e.g., welding-type system comprising the wire feeder 200 of Fig. 2) to provide roll automatic tensioning during welding operations. In this regard, the steps (or actions) in the process represented by the flow chart 500 may comprise a combination of operator actions (e.g., steps 502-508) and system actions (e.g., steps 510-512, 516-518, and 522).

In step 502, after an initial setting up step in which the system is powered on and necessary configuration is performed, the operator opens drive rolls.

In step 504, the operator clears old electrode wire. In step 506, the operator loads new electrode wire. In step 508, the operator closes drive rolls. In step 510, the operator jogs electrode wire.

In step 512, a check that the electrode wire is moving at target speed may be performed. In instances where it is determined that electrode wire is moving at target speed, the process proceeds to step 514. In instances where it is determined that electrode wire is not moving at target speed, the process proceeds to step 516.

In step 514, a "ready to weld" state is reached, with the process terminating.

In step 516, a check if there is too much tension or too much time may be performed. In instances where it is determined that there is too much tension or too much time, the process proceeds to step 520. In instances where it is determined that there is neither too much tension nor too much time, the process proceeds to step 518.

In step 518, Increase drive roll tension, loop back to step 512.

In step 520, an "error condition" state is reached, with the process continuing to step 522. In step 522, all drive roll tension is removed, and the process terminates

An example welding-type system, in accordance with the present disclosure, comprises a wire feeder comprising one or more wire feeding components configured to feed an electrode wire; and a wire tensioning mechanism configured to automatically control applying a tensioning force to the electrode wire during feeding of the electrode wire via the wire feeder, wherein the wire tensioning mechanism comprises one or more pairs of drive rolls for moving the electrode wire during the feeding of the electrode wire; and a tensioning control component configured for controlling the tensioning force; wherein the wire tensioning mechanism is configured to automatically modify, via the tensioning control component, the tensioning force to maintain a target value.

In an example embodiment, the tensioning control component comprises a spacing element configured to adjust spacing between rolls in at least one pair of drive rolls of the one or more pairs of drive rolls.

In an example embodiment, the spacing element comprises a tensioning pin, a cam, or one or more springs.

In an example embodiment, the spacing element comprises a tensioning pin that comprises a threading configured for causing the tensioning pin to move in manner that adjusts the spacing between the rolls in the at least one pair of drive rolls.

In an example embodiment, the tensioning control component further comprises a moving element configured for causing the spacing element to move in manner that adjusts the spacing between the rolls in the at least one pair of drive rolls.

In an example embodiment, the moving element comprises a rotating gear.

In an example embodiment, the wire tensioning mechanism is configured to set or adjust the tensioning force based on real-time wire speed during the feeding of the electrode wire.

In an example embodiment, the wire tensioning mechanism further comprises a sensory element configured to obtain or determine the wire speed.

In an example embodiment, the sensory element comprises one or more idler rolls configured to provide wire speed feedback.

In an example embodiment, the wire tensioning mechanism is configured to obtain or determine the wire speed based on feedback or input from a component in the welding-type system.

In an example embodiment, the component in the welding-type system comprises a feeding motor, and wherein the feedback or input comprises feeding motor tach feedback.

In an example embodiment, the wire tensioning mechanism is configured to obtain or determine the wire speed based on one or more operational parameters in the welding-type system.

In an example embodiment, the wire tensioning mechanism further comprises a tensioning arm that engages or houses one roll in at least one pair of drive rolls of the one or more pairs of drive rolls, wherein the tensioning arm is configured to enable adjusting spacing between the two rolls in the at least one pair of drive rolls.

In an example embodiment, the tensioning arm is configurable to move, in response to an action by the tensioning control component, to adjust spacing between the two rolls in the at least one pair of drive rolls.

In an example embodiment, the tensioning arm comprises a pivot point to enable moving the tensioning arm between an open state and closed state, wherein the two rolls in the at least one pair of drive rolls engage each other in the closed state and disengage in the open state.

In an example embodiment, the tensioning arm is spring-loaded to bias the tension arm towards the open state.

In an example embodiment, the tensioning arm further comprises locking element to lock the tensioning arm in place once the two rolls in the at least one pair of drive rolls engage each other.

In an example embodiment, the locking element is configured to engage a component of the wire tensioning mechanism to enable locking the tensioning arm in place.

In an example embodiment, controlling the tensioning force comprise setting or modifying spacing between rolls in at least one pair of drive rolls of the one or more pairs of drive rolls.

In an example embodiment, further comprising a control circuit configured to determine the tensioning force based on wire speed.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:
Clause 1. A welding-type system, comprising:
   a wire feeder comprising:
      one or more wire feeding components configured to feed an electrode wire; and
      a wire tensioning mechanism configured to automatically control applying a tensioning force to the electrode wire during feeding of the electrode wire via the wire feeder, wherein the wire tensioning mechanism comprises:
         one or more pairs of drive rolls for moving the electrode wire during the feeding of the electrode wire; and
         a tensioning control component configured for controlling the tensioning force;
   wherein the wire tensioning mechanism is configured to automatically modify, via the tensioning control component, the tensioning force to maintain a target value.
Clause 2. The welding-type system according to clause 1, wherein the tensioning control component comprises a spacing element configured to adjust spacing between rolls in at least one pair of drive rolls of the one or more pairs of drive rolls.
Clause 3. The welding-type system according to clause 2, wherein the spacing element comprises a tensioning pin, a cam, or one or more springs.
Clause 4. The welding-type system according to clause 2, wherein the spacing element comprises a tensioning pin that comprises a threading configured for causing the tensioning pin to move in manner that adjusts the spacing between the rolls in the at least one pair of drive rolls.
Clause 5. The welding-type system according to clause 2, wherein the tensioning control component further comprises a moving element configured for causing the spacing element to move in manner that adjusts the spacing between the rolls in the at least one pair of drive rolls.
Clause 6. The welding-type system according to clause 5, wherein the moving element comprises a rotating gear.
Clause 7. The welding-type system according to clause 1, wherein the wire tensioning mechanism is configured to set or adjust the tensioning force based on real-time wire speed during the feeding of the electrode wire.
Clause 8. The welding-type system according to clause 1, wherein the wire tensioning mechanism further comprises a sensory element configured to obtain or determine the wire speed.
Clause 9. The welding-type system according to clause 8, wherein the sensory element comprises one or more idler rolls configured to provide wire speed feedback.
Clause 10. The welding-type system according to clause 1, wherein the wire tensioning mechanism is configured to obtain or determine the wire speed based on feedback or input from a component in the welding-type system.
Clause 11. The welding-type system according to clause 10, wherein the component in the welding-type system comprises a feeding motor, and wherein the feedback or input comprises feeding motor tach feedback.
Clause 12. The welding-type system according to clause 1, wherein the wire tensioning mechanism is configured to obtain or determine the wire speed based on one or more operational parameters in the welding-type system.
Clause 13. The welding-type system according to clause 1, wherein the wire tensioning mechanism further comprises a tensioning arm that engages or houses one roll in at least one pair of drive rolls of the one or more pairs of drive rolls, wherein the tensioning arm is configured to enable adjusting spacing between the two rolls in the at least one pair of drive rolls.
Clause 14. The welding-type system according to clause 13, wherein the tensioning arm is configurable to move, in response to an action by the tensioning control component, to adjust spacing between the two rolls in the at least one pair of drive rolls.
Clause 15. The welding-type system according to clause 13, wherein the tensioning arm comprises a pivot point to enable moving the tensioning arm between an open state and closed state, wherein the two rolls in the at least one pair of drive rolls engage each other in the closed state and disengage in the open state.
Clause 16. The welding-type system according to clause 15, wherein the tensioning arm is spring-loaded to bias the tension arm towards the open state.
Clause 17. The welding-type system according to clause 13, wherein the tensioning arm further comprises locking element to lock the tensioning arm in place once the two rolls in the at least one pair of drive rolls engage each other.
Clause 18. The welding-type system according to clause 17, wherein the locking element is configured to engage a component of the wire tensioning mechanism to enable locking the tensioning arm in place.
Clause 19. The welding-type system according to clause 1, wherein controlling the tensioning force comprise setting or modifying spacing between rolls in at least one pair of drive rolls of the one or more pairs of drive rolls.
Clause 20. The welding-type system according to clause 1, further comprising a control circuit configured to determine the tensioning force based on wire speed.

## Claims

1. A welding-type system, comprising:
a wire feeder comprising:
one or more wire feeding components configured to feed an electrode wire; and
a wire tensioning mechanism configured to automatically control applying a tensioning force to the electrode wire during feeding of the electrode wire via the wire feeder, wherein the wire tensioning mechanism comprises:
one or more pairs of drive rolls for moving the electrode wire during the feeding of the electrode wire; and
a tensioning control component configured for controlling the tensioning force;
wherein the wire tensioning mechanism is configured to automatically modify, via the tensioning control component, the tensioning force to maintain a target value.

2. The welding-type system according to claim 1, wherein the tensioning control component comprises a spacing element configured to adjust spacing between rolls in at least one pair of drive rolls of the one or more pairs of drive rolls.

3. The welding-type system according to claim 2, wherein the spacing element comprises a tensioning pin, a cam, or one or more springs, or
wherein the spacing element comprises a tensioning pin that comprises a threading configured for causing the tensioning pin to move in manner that adjusts the spacing between the rolls in the at least one pair of drive rolls.

4. The welding-type system according to claim 2, wherein the tensioning control component further comprises a moving element configured for causing the spacing element to move in manner that adjusts the spacing between the rolls in the at least one pair of drive rolls and optionally wherein the moving element comprises a rotating gear.

5. The welding-type system according to claim 1, wherein the wire tensioning mechanism is configured to set or adjust the tensioning force based on real-time wire speed during the feeding of the electrode wire.

6. The welding-type system according to claim 1, wherein the wire tensioning mechanism further comprises a sensory element configured to obtain or determine the wire speed and optionally wherein the sensory element comprises one or more idler rolls configured to provide wire speed feedback.

7. The welding-type system according to claim 1, wherein the wire tensioning mechanism is configured to obtain or determine the wire speed based on feedback or input from a component in the welding-type system and optionally
wherein the component in the welding-type system comprises a feeding motor, and wherein the feedback or input comprises feeding motor tach feedback.

8. The welding-type system according to claim 1, wherein the wire tensioning mechanism is configured to obtain or determine the wire speed based on one or more operational parameters in the welding-type system.

9. The welding-type system according to claim 1, wherein the wire tensioning mechanism further comprises a tensioning arm that engages or houses one roll in at least one pair of drive rolls of the one or more pairs of drive rolls, wherein the tensioning arm is configured to enable adjusting spacing between the two rolls in the at least one pair of drive rolls.

10. The welding-type system according to claim 9, wherein the tensioning arm is configurable to move, in response to an action by the tensioning control component, to adjust spacing between the two rolls in the at least one pair of drive rolls.

11. The welding-type system according to claim 9, wherein the tensioning arm comprises a pivot point to enable moving the tensioning arm between an open state and closed state, wherein the two rolls in the at least one pair of drive rolls engage each other in the closed state and disengage in the open state.

12. The welding-type system according to claim 11, wherein the tensioning arm is spring-loaded to bias the tension arm towards the open state.

13. The welding-type system according to claim 9, wherein the tensioning arm further comprises locking element to lock the tensioning arm in place once the two rolls in the at least one pair of drive rolls engage each other.

14. The welding-type system according to claim 13, wherein the locking element is configured to engage a component of the wire tensioning mechanism to enable locking the tensioning arm in place.

15. The welding-type system according to claim 1, wherein controlling the tensioning force comprise setting or modifying spacing between rolls in at least one pair of drive rolls of the one or more pairs of drive rolls or wherein the welding-type system further comprises a control circuit configured to determine the tensioning force based on wire speed.
